# EUROPÄISCHE PATENTSCHRIFT

(11) **EP 2 256 525 B1**
(45) Veröffentlichungstag und Bekanntmachung des Hinweises auf die Patenterteilung: **19.09.2012**
(21) Anmeldenummer: 10163109.1
(22) Anmeldetag: 18.05.2010
(51) Int. Cl.: F21V 14/00, G02B 5/02, G02F 1/13357

(54) **Beleuchtungsanordnung mit veränderbarem Lichtbeeinflussungselement**
Lighting assembly with adjustable light influencing element
Agencement d'éclairage doté d'un élément d'influence de la lumière modifiable

(30) Priorität: 20.05.2009 DE 102009022225
(43) Veröffentlichungstag der Anmeldung: 01.12.2010
(73) Patentinhaber: Zumtobel Lighting GmbH, 6850 Dornbirn (AT)
(72) Erfinder: Kenneth, Martin, 6845 Hohenems (AT)
(74) Vertreter: Thun, Clemens

(56) Entgegenhaltungen:
- EP-A1- 0 707 407
- EP-A2- 1 118 973
- WO-A1-2007/122544
- WO-A2-02/08799
- WO-A2-2008/107584
- JP-A- 9 015 590
- US-A1- 2008 246 895
- KATAGIRI BAKU ET AL: "High Contrast Front Projection Display System Optimizing the Projected Light Angle Range" IDW, LAD2 - 4, LONDON UK, 1. Januar 2003 (2003-01-01), Seiten 1569-1572, XP007016385

## Beschreibung

Die vorliegende Erfindung betrifft eine Beleuchtungsanordnung mit einer Lichtquelle, einem Lichtbeeinflussungselement, bei dem die lichtbeeinflussenden Eigenschaften veränderbar sind, und einer Steuereinrichtung zur Steuerung der lichtbeeinflussenden Eigenschaften des Lichtbeeinflussungselements. Ferner betrifft die vorliegende Erfindung ein entsprechendes Verfahren zur Lichtabgabe.

Bei flächigen Leuchten, die mehrere punktförmige Lichtquellen, beispielsweise Leuchtdioden, aufweisen, ergibt sich insbesondere bei der Abgabe von farbigem Licht das Problem, dass ein Lichtbeeinflussungselement, beispielsweise ein Diffusor, vor den Lichtquellen erforderlich ist, um zu verhindern, dass für den Betrachter der Leuchte die einzelnen Lichtquellen individuell wahrnehmbar sind. Aus der internationalen Anmeldung WO 2008/107584 A2 ist beispielsweise eine Anordnung bekannt, bei der Lichtquellen in einer Ebene angeordnet sind und vor den Lichtquellen ein Diffusor vorgesehen ist, um punktförmige Leuchtdichteverteilungen zu verhindern.

Eine derartige Anordnung hat nun jedoch zur Folge, dass das von außen auf den Diffusor treffende Umgebungslicht zumindest teilweise reflektiert bzw. zurückgestreut wird, wodurch der Kontrast in der Wahrnehmung des farbigen Lichts abnimmt und somit weniger satte Farben bzw. Farbveränderungen entstehen.

Auch aus der US 2008/0246895 A1 und der WO 2007/122544 A1 sind derartige Anordnungen bekannt, wobei die lichtbeeinflussenden Eigenschaften der Lichtbeeinflussungselemente bei diesen Anordnungen veränderbar sind. Derartige Lichtbeeinflussungselemente sind auch aus der EP 0 707 407 A1, JP 9 015590 A, WO 02/08799 A2 und "Katagiri Baku et al: "High Contrast Front Projection Display System Optimizing the Projected Light Angle Range" IDW, LAD2 - 4, London UK, 1. Januar 2003 (2003-01-01), Seiten 1569-1572, XP007016385" bekannt.

Des Weiteren kann der EP 1 118 973 A2 ein Reflektionsschutz für Lichtzeichenanlagen entnommen werden, bei dem vor entsprechenden Lichtquellen Abdeckscheiben angeordnet sind, die jeweils ein elektrochromes Element aufweisen, das in Abhängigkeit des Schaltzustandes der jeweiligen Lichtquelle lichtdurchlässig oder lichtundurchlässig ist.

Der vorliegenden Erfindung liegt nun die Aufgabe zugrunde, eine Beleuchtungsanordnung zu entwickeln, bei der zum einen die punktförmigen Lichtquellen nicht mehr individuell wahrnehmbar sind und zum anderen das von außen auf die Beleuchtungsanordnung treffende Umgebungslicht die Beleuchtungseigenschaften der Beleuchtungsanordnung nicht bzw. nur unwesentlich beeinträchtigt.

Die Aufgabe wird durch eine Beleuchtungsanordnung gemäß Anspruch 1 und durch ein Verfahren zur Lichtabgabe gemäß Anspruch 8 gelöst. Vorteilhafte Weiterbildungen der Erfindung sind Gegenstand der abhängigen Ansprüche.

Erfindungsgemäß wird eine Beleuchtungsanordnung vorgeschlagen, die mindestens eine Lichtquelle, ein in Abstrahlrichtung vor der Lichtquelle angeordnetes Lichtbeeinflussungselement und eine Steuereinrichtung aufweist, wobei vorgesehen ist, dass die lichtbeeinflussenden Eigenschaften des Lichtbeeinflussungselements veränderbar sind und durch die Steuereinrichtung gesteuert werden und die Steuerung der lichtbeeinflussenden Eigenschaften vom Schaltzustand der Lichtquelle abhängt. Bei dem Lichtbeeinflussungselement handelt es sich hierbei um einen Diffusor und bei den lichtbeeinflussenden Eigenschaften um den Diffusionsgrad, wobei der Diffusor bei ein- bzw. hell geschalteter Lichtquelle opak bzw. lichtstreuend und bei aus- bzw. dunkel geschalteter Lichtquelle transparent bzw. klar ist.

Erfindungsgemäß wird des Weiteren ein Verfahren zur Lichtabgabe vorgeschlagen, bei dem mindestens eine Lichtquelle zwischen mindestens zwei Schaltzuständen wechselt und die lichtbeeinflussenden Eigenschaften eines in Abstrahlrichtung vor der Lichtquelle angeordneten Lichtbeeinflussungselements in Abhängigkeit von den Schaltzuständen der Lichtquelle geändert werden. Das Lichtbeeinflussungselement ist hierbei als Diffusor ausgebildet, wobei es sich dann bei den lichtbeeinflussenden Eigenschaften um den Diffusionsgrad handelt, der durch Anlegen einer Spannung geändert wird. Zusätzlich wechselt die Lichtquelle zwischen einem Einschaltzustand und einem Ausschaltzustand und der Diffusor wird durch die Steuereinrichtung derart angesteuert, dass er bei ein bzw. hell-geschalteter Lichtquelle opak bzw. lichtstreuend und bei aus- bzw. dunkel geschalteter Lichtquelle transparent bzw. klar ist.

Gemäß einer vorteilhaften Weiterbildung der Erfindung kann in Abstrahlrichtung neben oder hinter der Lichtquelle eine lichtabsorbierende Oberfläche derart angeordnet sein, dass von außen in die Beleuchtungsanordnung eintretendes Licht von der Oberfläche absorbiert wird. Ferner kann in Abstrahlrichtung neben oder hinter der Lichtquelle eine zumindest teiltransparente Oberfläche oder nicht flächenfüllende LED-Platine derart angeordnet sein, dass von außen in die Beleuchtungsanordnung eintretendes Licht teilweise durch die Anordnung hindurch gelassen wird.

Zusätzlich kann auch noch vorgesehen sein, dass die Lichtquelle gepulst betrieben wird und als Leuchtdiode oder als ein für eine Lichtmischung zusammengehörender Cluster aus mehreren Leuchtdioden ausgebildet ist. Hierbei kann es sich insbesondere auch um eine farbige Lichtquelle handeln.

Bei einer weiteren bevorzugten Ausführungsform der Erfindung kann für den Fall einer farbigen Lichtquelle noch eine weitere sich von der farbigen Lichtquelle unterscheidende Lichtquelle vorgesehen sein, die weißes Licht im Wesentlichen engstrahlend und in bestimmten Raumwinkelbereichen abgeblendet durch das Lichtbeeinflussungselement abgegeben wird.

Nachfolgend soll die Erfindung anhand von Ausführungsbeispielen und den beiliegenden Zeichnungen näher erläutert werden. Es zeigen:
- Figur 1: eine schematische Darstellung eines ersten Ausführungsbeispiels der erfindungsgemäßen Beleuchtungsanordnung;
- Figur 2: eine weitere schematische Darstellung des ersten Ausführungsbeispiels der erfindungsgemäßen Beleuchtungsanordnung;
- Figur 3: eine schematische Darstellung eines zweiten Ausführungsbeispiels der erfindungsgemäßen Beleuchtungsanordnung;
- Figur 4: eine weitere schematische Darstellung des zweiten Ausführungsbeispiels der erfindungsgemäßen Beleuchtungsanordnung.

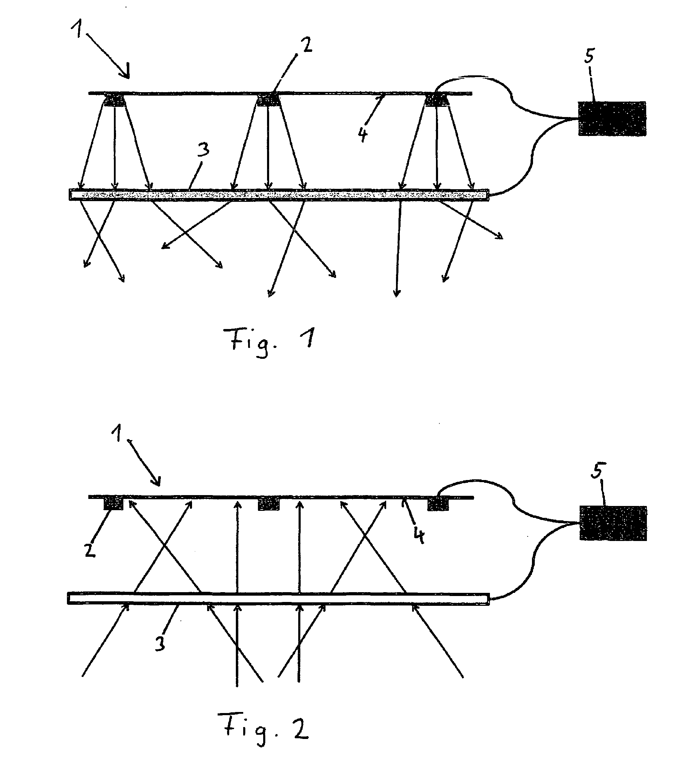

In den Figuren 1 und 2 ist schematisch eine erste Ausführungsform der erfindungsgemäßen Beleuchtungsanordnung 1 dargestellt. Die Beleuchtungsanordnung 1 weist hierbei mehrere farbige Leuchtdioden 2 als Lichtquellen auf, die gepulst betrieben werden. Vor den Leuchtdioden 2 ist ein als Diffusor 3 ausgebildetes Lichtbeeinflussungselement vorgesehen. Des Weiteren ist bei der in den Figuren 1 und 2 dargestellten erfindungsgemäßen Beleuchtungsanordnung eine lichtabsorbierende Oberfläche 4 hinter den Leuchtdioden 2 angeordnet.

Die lichtabsorbierende Oberfläche 4 kann hierbei beispielsweise auf der zur Halterung der Leuchtdioden 2 vorgesehenen Platine angebracht sein. Auch eine Platine, die selbst absorbierend ausgebildet ist, kann hier Anwendung finden. An Stelle der Platine können aber auch zusätzliche Bauteile in die Beleuchtungsanordnung 1 integriert sein, die eine absorbierende Oberfläche 4 aufweisen oder absorbierend ausgeführt sind.

Weiterer Bestandteil der erfindungsgemäßen Beleuchtungsanordnung 1 ist ferner eine Steuereinrichtung 5, welche die lichtbeeinflussenden Eigenschaften des Diffusors 3, hier den Diffusionsgrad, steuert. Diese Steuerung des Diffusionsgrades erfolgt hierbei insbesondere in Abhängigkeit vom Schaltzustand der Leuchtdioden 2. Hierbei ist vorgesehen, dass bei eingeschalteten Leuchtdioden 2 der Diffusor 3 opak bzw. lichtstreuend ist und bei ausgeschalteten Leuchtdioden 2 transparent bzw. klar. Selbstverständlich müssen die Leuchtedioden nicht vollständig ein- und ausgeschaltet werden. Es wäre ausreichend, die Leuchtdioden alternierend hell bzw. dunkel zu schalten in Abhängigkeit hiervon den Diffusor wie oben beschrieben anzusteuern.

Hierdurch sind die gepulst betriebenen farbigen Leuchtdioden 2, wie in Figur 1 gezeigt, während ihrer Einschaltphasen für einen Benutzer der erfindungsgemäßen Beleuchtungsanordnung 1 nicht mehr einzeln wahrnehmbar sondern werden vielmehr als diffuses Licht wahrgenommen. Auf der anderen Seite wird, wie in Figur 2 dargestellt, das von außen auf den Diffusor 3 auftreffende Umgebungslicht während den Ausschaltphasen der Leuchtdioden 2 nun nicht mehr von dem Diffusor 3 reflektiert sondern vielmehr aufgrund der Transparenz bzw. Klarheit des Diffusors 3 nach innen in die Beleuchtungsanordnung 1 geleitet. Durch die lichtabsorbierende Oberfläche 4 wird allerdings das Umgebungslicht dann absorbiert, wodurch verhindert wird, dass das Umgebungslicht die Beleuchtungsanordnung 1 wieder verlassen kann.

Hierdurch wird deutlich weniger von außen auf den Diffusor 3 auftreffendes Umgebungslicht zurückgestreut bzw. reflektiert, was zur Folge hat, dass das in den Einschaltphasen der farbigen Leuchtdioden 2 abgegebene Licht deutlich intensiver wahrnehmbar ist und der Kontrast der Farben erhöht wird. Je kürzer hierbei die Einschaltzeiten der Leuchtdioden 2 im Vergleich zu den Ausschaltzeiten sind, desto höher ist der Kontrast und die Reinheit der Farben. Dies ergibt sich daraus, dass im Wesentlichen nur im diffusen Modus Umgebungslicht zurückgestreut bzw. reflektiert wird, das den Kontrast bzw. das von den Leuchtdioden 2 abgegebene farbige Licht stört bzw. beeinträchtigt. Insgesamt ist auch vorgesehen, dass die Gesamtschaltzeiten derart schnell sind, dass für einen Beobachter der Beleuchtungsanordnung 1 kein Schalten bzw. Flimmern mehr wahrnehmbar ist.

Auch die Intensität der Leuchtdioden 2 ist entsprechend hoch, um trotz der kurzen Einschaltzeiten eine ausreichende Helligkeit der farbigen Leuchtdioden 2 zu erreichen, da hier die Helligkeit in der menschlichen Wahrnehmung zeitlich gemittelt wird.

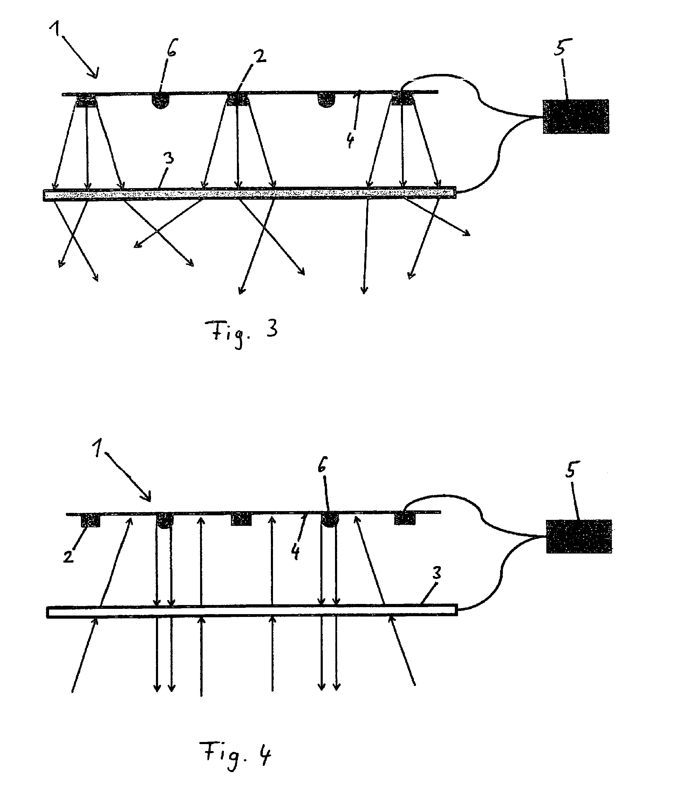

Eine weitere Ausführungsform der erfindungsgemäßen Beleuchtungsanordnung 1 ist in den Figuren 3 und 4 gezeigt. Hierbei sind neben den farbigen Leuchtdioden 2 zusätzlich noch weitere Leuchtdioden 6 vorgesehen, die im Vergleich zu den farbigen Leuchtdioden 2 eine relativ eng strahlende Lichtabstrahlcharakteristik aufweisen und Licht in bestimmten Raumwinkelbereichen abgeblendet durch das Lichtbeeinflussungselement 3 abgegeben. Um ein derartig gerichtetes Licht abstrahlen zu können, kann beispielsweise eine in den Figuren 3 und 4 nicht gezeigte direkt vor den zusätzlichen Leuchtdioden 6 angeordnete Optik vorgesehen sein.

Die Optik bündelt dabei das Licht zu einem sehr schmalen Strahlenbündel, welches senkrecht zur Diffusoroberfläche abgegeben wird, wodurch ein vor bzw. unterhalb der Beleuchtungsanordnung 1 liegender Bereich beleuchtet wird. Hierbei ergibt sich eine erfindungsgemäße Beleuchtungsanordnung 1, bei der die zusätzlichen Leuchtdioden 6 die Hauptbeleuchtungsaufgabe übernehmen und die farbigen Leuchtdioden 2 als sogenannte Medienleuchten zum Einsatz kommen, die beispielsweise als Effektleuchtdioden verschiedene Inhalte oder Stimmungen wiedergeben, im Wesentlichen jedoch aber nicht zur eigentlichen Beleuchtung vorgesehen sind.

Die zusätzlichen Leuchtdioden 6 werden in den Zwischenphasen eingeschaltet, in denen die farbigen Leuchtdioden 2 ausgeschaltet sind und der Diffusor 3 transparent bzw. klar ist. Hierdurch ist für den Benutzer bzw. Beobachter der erfindungsgemäßen Beleuchtungsanordnung 1 die sehr stark gerichtete Lichtabgabe der zusätzlichen Leuchtdioden 6 kaum wahrnehmbar, wohingegen die farbige Lichtabgabe durch die Leuchtdioden 2 vollständig als diffuses Licht wahrnehmbar ist.

## Patentansprüche

1. Beleuchtungsanordnung (1) aufweisend
• mindestens eine Lichtquelle (2),
• ein in Abstrahlrichtung vor der Lichtquelle (2) angeordnetes Lichtbeeinflussungselement (3), dessen lichtbeeinflussende Eigenschaften veränderbar sind und
• eine Steuereinrichtung (5) zur Steuerung der lichtbeeinflussenden Eigenschaften des Lichtbeeinflussungselements (3),
wobei die Steuerung der lichtbeeinflussenden Eigenschaften des Lichtbeeinflussungselements (3) vom Schaltzustand der Lichtquelle (2) abhängig ist,
**dadurch gekennzeichnet,**
**dass** das Lichtbeeinflussungselement ein Diffusor (3) ist und es sich bei den lichtbeeinflussenden Eigenschaften um den Diffusionsgrad handelt und dass der Diffusor (3) bei ein- bzw. hell geschalteter Lichtquelle (2) opak bzw. lichtstreuend und bei aus- bzw. dunkel geschalteter Lichtquelle (2) transparent bzw. klar ist.

2. Beleuchtungsanordnung nach Anspruch 1,
**dadurch gekennzeichnet,**
**dass** in Abstrahlrichtung neben oder hinter der Lichtquelle (2) eine lichtabsorbierende Oberfläche (4) derart angeordnet ist, dass von außen in die Beleuchtungsanordnung (1) eintretendes Licht von der Oberfläche (4) im Wesentlichen absorbiert wird.

3. Beleuchtungsanordnung nach einem der Ansprüche 1-2,
**dadurch gekennzeichnet,**
**dass** in Abstrahlrichtung neben oder hinter der Lichtquelle (2) eine zumindest teiltransparente Oberfläche (4) oder nicht flächenfüllende LED-Platine derart angeordnet ist, dass von außen in die Beleuchtungsanordnung (1) eintretendes Licht teilweise durch die Anordnung hindurch gelassen wird.

4. Beleuchtungsanordnung nach einem der Ansprüche 1-3,
**dadurch gekennzeichnet,**
**dass** die Lichtquellen als Leuchtdiode (2) oder als ein für eine Lichtmischung zusammengehörender Cluster aus mehreren Leuchtdioden (2) ausgebildet ist.

5. Beleuchtungsanordnung nach einem der Ansprüche 1-4,
**dadurch gekennzeichnet,**
**dass** die Lichtquelle als farbige Lichtquelle (2) ausgebildet ist.

6. Beleuchtungsanordnung nach Anspruch 5,
**dadurch gekennzeichnet,**
**dass** mindestens eine weitere Lichtquelle (6), welche sich von der farbigen Lichtquelle (2) unterscheidet, in der Beleuchtungsanordnung (1) angeordnet ist, wobei der Schaltzustand der weiteren Lichtquelle (6) vom Schaltzustand der farbigen Lichtquelle (2) abhängig ist.

7. Beleuchtungsanordnung nach Anspruch 6,
**dadurch gekennzeichnet,**
**dass** die weitere Lichtquelle (6) derart ausgebildet ist, dass bei ausgeschalteter farbiger Lichtquelle (2) weißes Licht im Wesentlichen engstrahlend und in bestimmten Raumwinkelbereichen abgeblendet durch das Lichtbeeinflussungselement (3) abgegeben wird.

8. Verfahren zur Lichtabgabe, bei dem mindestens eine Lichtquelle (2) zwischen mindestens zwei Schaltzuständen wechselt und die lichtbeeinflussenden Eigenschaften eines in Abstrahlrichtung vor der Lichtquelle (2) angeordneten Lichtbeeinflussungselements (3) in Abhängigkeit von den Schaltzuständen der Lichtquelle (2) geändert werden,
**dadurch gekennzeichnet,**
**dass** es sich bei dem Lichtbeeinflussungselement um einen Diffusor (3) und bei den lichtbeeinflussenden Eigenschaften um den Diffusionsgrad handelt, wobei durch Anlegen einer Spannung der Diffusionsgrad geändert wird und dass die Lichtquelle (2) zwischen einem Einschaltzustand und einem Ausschaltzustand wechselt und der Diffusor (3) im ein- bzw. hell-geschalteten Zustand der Lichtquelle (2) derart angesteuert wird, dass er opak bzw. lichtstreuend ist und im aus- bzw. dunkel-geschalteten Zustand der Lichtquelle (2) derart angesteuert wird, dass er transparent bzw. klar ist.

9. Verfahren nach Anspruch 8,
**dadurch gekennzeichnet,**
**dass** die Lichtquelle (2) gepulst betrieben wird.

10. Verfahren nach einem der Ansprüche 8-9,
**dadurch gekennzeichnet,**
**dass** die Lichtquelle als farbige Lichtquelle (2) ausgebildet ist.

11. Verfahren nach Anspruch 10,
**dadurch gekennzeichnet,**
**dass** eine weitere Lichtquelle (6), welche sich von der farbigen Lichtquelle (2) unterscheidet, Licht in Abhängigkeit vom Schaltzustand der farbigen Lichtquelle (2) abstrahlt.

12. Verfahren nach Anspruch 11,
**dadurch gekennzeichnet,**
**dass** die weitere Lichtquelle (6) weißes Licht im Wesentlichen engstrahlend und in bestimmten Raumwinkelbereichen abgeblendet durch das Lichtbeeinflussungselement (3) abgibt und im Ausschaltzustand bzw. Dunkel-Schaltzustand der farbigen Lichtquelle (2) hell- bzw. eingeschaltet ist.

## Claims

1. A lighting arrangement (1) having
• at least one light source (2),
• a light-influencing element (3) which is arranged in front of the light source (2) in the radiation direction and the light-influencing properties of which can be varied, and
• a control device (5) for the control of the light-influencing properties of the light-influencing element (3),
wherein the control of the light-influencing properties of the light-influencing element (3) is dependent upon the switching state of the light source (2),
**characterised in that**
the light-influencing element is a diffuser (3), and the light-influencing properties are the degree of diffusion, and **in that** when the light source (2) is switched on or brightened the diffuser (3) is opaque or light-dispersing respectively and when the light source (2) is switched off or dimmed it is transparent or clear respectively.

2. A lighting arrangement according to claim 1,
**characterised in that**
a light-absorbing surface (4) is arranged next to or behind the light source (2) in the radiation direction in such a way that light entering the lighting arrangement (1) from without is substantially absorbed by the surface (4).

3. A lighting arrangement according to one of claims 1-2,
**characterised in that**
an at least partially transparent surface (4) or an LED printed circuit board that does not fill the area is arranged next to or behind the light source (2) in the radiation direction in such a way that light entering the lighting arrangement (1) from without is in part let through the arrangement.

4. A lighting arrangement according to one of claims 1-3,
**characterised in that**
the light source is formed as a light-emitting diode (2) or as a cluster of a plurality of light-emitting diodes (2) that belong together for a light mix.

5. A lighting arrangement according to one of claims 1-4,
**characterised in that**
the light source is formed as a coloured light source (2).

6. A lighting arrangement according to claim 5,
**characterised in that**
at least one further light source (6), which differs from the coloured light source (2), is arranged in the lighting arrangement (1), wherein the switching state of the further light source (6) is dependent upon the switching state of the coloured light source (2).

7. A lighting arrangement according to claim 6,
**characterised in that**
the further light source (6) is formed in such a way that when the coloured light source (2) is switched off white light is emitted substantially in a narrow beam and faded out in certain solid-angle regions by the light-influencing element (3).

8. Method for light-emission in which at least one light source (2) changes between at least two switching states, and the light-influencing properties of a light-influencing element (3) arranged in front of the light source (2) in the radiation direction are varied as a function of the switching states of the light source (2),
**characterised in that**
the light-influencing element is a diffuser (3), and the light-influencing properties are the degree of diffusion, wherein the degree of diffusion is varied by applying a voltage, and **in that** the light source (2) changes between a switched-on state and a switched-off state, and in the switched-on or brightened state of the light source (2) the diffuser (3) is activated in such a way that it is opaque or light-dispersing respectively and in the switched-off or dimmed state of the light source (2) it is activated in such a way that it is transparent or clear respectively.

9. Method according to claim 8,
**characterised in that**
the light source (2) is operated in a pulsed manner.

10. Method according to one of claims 8-9,
**characterised in that**
the light source is formed as a coloured light source (2).

11. Method according to claim 10,
**characterised in that**
a further light source (6), which differs from the coloured light source (2), radiates light as a function of the switching state of the coloured light source (2).

12. Method according to claim 11,
**characterised in that**
the further light source (6) emits white light substantially in a narrow beam and faded out in certain solid-angle regions by the light-influencing element (3), and in the switched-off state or dimmed state of the coloured light source (2) it is brightened or switched on respectively.

## Revendications

1. Agencement d'éclairage (1), comprenant
- au moins une source de lumière (2),
- un élément influençant la lumière (3) disposé devant la source de lumière (2) dans le sens de rayonnement et dont les propriétés influençant la lumière sont variables, et
- un dispositif de commande (5) pour commander les propriétés influençant la lumière de l'élément influençant la lumière (3),
dans lequel la commande des propriétés influençant la lumière de l'élément influençant la lumière (3) dépend de l'état de commutation de la source de lumière (2),
**caractérisé en ce**
**que** l'élément influençant la lumière est un diffuseur (3) et les propriétés influençant la lumière sont le degré de diffusion, et en ce que le diffuseur (3) est opaque ou diffusant lorsque la source de lumière (2) est sous tension ou allumée et transparent ou limpide lorsque la source de lumière (2) est hors tension ou éteinte.

2. Agencement d'éclairage selon la revendication 1,
**caractérisé en ce**
**que** dans le sens de rayonnement, à côté ou derrière la source de lumière (2), une surface (4) absorbant la lumière est agencée de telle sorte que la lumière pénétrant de l'extérieur dans l'agencement d'éclairage (1) est substantiellement absorbée par la surface (4).

3. Agencement d'éclairage selon l'une quelconque des revendications 1 à 2,
**caractérisé en ce**
**que** dans le sens de rayonnement, à côté ou derrière la source de lumière (2), une surface (4) au moins partiellement transparente ou une platine LED n'occupant pas toute la surface est agencée de telle sorte que la lumière pénétrant de l'extérieur dans l'agencement d'éclairage (1) peut passer en partie à travers l'agencement.

4. Agencement d'éclairage selon l'une quelconque des revendications 1 à 3,
**caractérisé en ce**
**que** la source de lumière est réalisée sous forme de diode électroluminescente (2) ou sous forme de groupements composés de plusieurs diodes électroluminescentes (2) et associés pour un mélange de lumière.

5. Agencement d'éclairage selon l'une quelconque des revendications 1 à 4,
**caractérisé en ce**
**que** la source de lumière est réalisée sous forme de source de lumière chromatique (2).

6. Agencement d'éclairage selon la revendication 5,
**caractérisé en ce**
**qu'**au moins une source de lumière supplémentaire (6) différente de la source de lumière chromatique (2), est agencée dans l'agencement d'éclairage (1), dans lequel l'état de commutation de la source de lumière (6) supplémentaire dépend de l'état de commutation de la source de lumière chromatique (2).

7. Agencement d'éclairage selon la revendication 6,
**caractérisé en ce**
**que** la source de lumière supplémentaire (6) est réalisée de telle sorte que lorsque la source de lumière chromatique (2) est éteinte, de la lumière blanche est émise par l'élément influençant la lumière (3) substantiellement à faisceau dirigé et de manière tamisée dans certaines zones d'angle solide.

8. Procédé d'émission de lumière, dans lequel au moins une source de lumière (2) alterne entre au moins deux états de commutation et les propriétés influençant la lumière d'un élément influençant la lumière (3) disposé devant la source de lumière (2) dans le sens du rayonnement sont modifiées en fonction des états de commutation de la source de lumière (2),
**caractérisé en ce**
**que** l'élément influençant la lumière est un diffuseur (3) et les propriétés influençant la lumière sont le degré de diffusion, dans lequel l'application d'une tension modifie le degré de diffusion, et en ce que la source de lumière (2) alterne entre un état sous tension et un état hors tension et le diffuseur (3) est piloté à l'état sous tension allumé de la source de lumière (2) de telle sorte qu'il est opaque ou diffusant lorsque la source de lumière (2) est sous tension ou allumée et transparent ou limpide lorsque la source de lumière (2) est hors tension ou éteinte.

9. Procédé selon la revendication 8,
**caractérisé en ce**
**que** la source de lumière (2) est exploitée de manière pulsée.

10. Procédé selon l'une quelconque des revendications 8 à 9,
**caractérisé en ce**
**que** la source de lumière est réalisée comme une source de lumière chromatique (2).

11. Procédé selon la revendication 10,
**caractérisé en ce**
**qu'**une source de lumière supplémentaire (6) qui est différente de la source de lumière (2) chromatique dégage de la lumière en fonction de l'état de commutation de la source de lumière chromatique (2).

12. Procédé selon la revendication 11,
**caractérisé en ce**
**que** la source de lumière supplémentaire (6) émet de la lumière blanche par l'élément influençant la lumière (3), substantiellement à faisceau dirigé et de manière tamisée dans certaines zones d'angle solide, et est allumée ou sous tension à l'état hors tension ou éteint de la source de lumière chromatique (2).
